# FASCICULE DE BREVET EUROPEEN

(11) **EP 2 453 116 B1**
(45) Date de publication et mention de la délivrance du brevet: **29.05.2013**
(21) Numéro de dépôt: 11186035.9
(22) Date de dépôt: 20.10.2011
(51) Int. Cl.: F01N 3/20

(54) **Méthode de contrôle de l'activation d'un système de réduction catalytique sélective**
Kontrollmethode für die Aktivierung eines Systems mit selektiver katalytischer Reduktion
Method for checking the activation of a selective catalytic reduction system

(30) Priorité: 16.11.2010 FR 1059414
(43) Date de publication de la demande: 16.05.2012
(73) Titulaire: PSA Peugeot Citroen Automobiles S.A., 78140 Velizy Villacoublay (FR)
(72) Inventeur: Saby, Marie-Pierre, 78990 ELANCOURT (FR); Lee, Eric, 94100 ST MAUR DES FOSSES (FR); Georgiadis, Evangelos, 75013 PARIS (FR)

(56) Documents cités:
- WO-A1-2010/066564
- FR-A1- 2 880 064
- FR-A1- 2 917 791
- FR-A1- 2 921 105

## Description

La présente invention concerne un procédé de l'activation d'un système de réduction catalytique sélective pour véhicule.

Dans un contexte de dépollution des gaz d'échappement d'un moteur diesel, les systèmes de réduction catalytique sélective (ou SCR pour « Sélective Catalyst Réduction » en anglais) ont pour but de réduire les oxydes d'azote (NOX) contenus dans les gaz d'échappement. Le système SCR utilise une réaction chimique entre ces mêmes NOX et un réducteur. Classiquement le réducteur est de l'ammoniac (NH3), injecté directement dans la ligne d'échappement ou par l'intermédiaire d'une autre espèce chimique comme par exemple de l'urée.

Les systèmes actuels de dépollution demandent un système SCR pouvant amener le réducteur au niveau de l'injecteur dans des conditions adéquates d'injection. Ce conditionnement est opéré dans le ou les réservoirs de stockage de l'agent réducteur ou de son précurseur et dans la ou les lignes de transfert entre ces réservoirs et la ligne d'échappement, constituées typiquement de canalisations, de pompe, de système doseurs et de l'injecteur proprement dit.

Il est préférable d'éviter de stocker de l'agent réducteur dans ces lignes de transfert lorsque le moteur thermique du véhicule est à l'arrêt. En effet des espèces chimiques comme l'urée gèlent relativement facilement ce qui peut bloquer le bon fonctionnement notamment de l'injecteur (bouchon ou paillettes) ou endommager les canalisations amenant le fluide du réservoir à l'injecteur. Par ailleurs, on doit éviter tout risque de rejets directs de l'agent réducteur, l'ammoniac étant en soi un composé considéré comme polluant.

De ce fait, on procède à des purges de manière à faire retourner dans le réservoir l'agent réducteur non utilisé et à le remplacer par un fluide de purge, tel que de l'air ou des gaz d'échappement.

Le document FR-A-2 921 105 décrit un système de traitement des gaz d'échappement par injection d'une solution d'urée dans une ligne d'échappement, le système comportant une pompe capable à la fois d'alimenter la ligne d'alimentation en urée en amont de l'injecteur et de purger au moins partiellement cette ligne d'alimentation en y aspirant un gaz, tel que des gaz d'échappement. Selon ce document FR-A-2 921 105, l'activation et/ou la désactivation du fonctionnement de la pompe et du système d'aspiration sont effectuées de manière séquencée au cours d'une même procédure de purge.

Le document FR-A-2 921 105 précité ne traite pas du remplissage de la ligne d'alimentation en urée consécutivement à une purge ou lors du tout premier démarrage du moteur en sortie d'usine.

Le document FR2917791A1 décrit une méthode de contrôle de l'activation d'un système de traitement des gaz d'échappement d'un moteur à combustion interne conforme au préambule de la revendication 1. Une telle méthode ne présente pas les avantages visés par l'invention.

La présente invention vise à proposer une procédure propre à réalimenter la ligne d'alimentation en amont de l'injecteur dans les meilleures conditions possible.

Ce but est atteint par une méthode de contrôle de l'activation d'un système de traitement des gaz d'échappement d'un moteur à combustion interne par injection d'un agent de traitement dans la ligne d'échappement du moteur, le système comprenant une canalisation d'alimentation de l'agent de traitement et une pompe susceptible à la fois d'alimenter l'injecteur et de purger au moins pour partie la canalisation d'alimentation suite à une demande d'arrêt du moteur, l'activation du système comportant une phase de remplissage de la canalisation et une phase de mise en pression de la canalisation, caractérisée par une étape de détermination d'une durée d'amorçage en fonction d'un état de remplissage de la canalisation d'alimentation avant l'activation de la pompe et par un décompte de cette durée avant d'initier la phase de mise en pression.

Ainsi, l'invention permet de réaliser l'opération de remplissage dans un temps minimum, sans pour autant requérir des capteurs permettant d'évaluer si le remplissage est effectif ou non.

L'invention part de la considération de ce que même si une opération de purge est normalement déclenchée à la suite de toute demande d'arrêt moteur, cette purge peut ne pas avoir été complète. Ceci est notamment le cas si le véhicule équipé du système de traitement des gaz d'échappement est muni d'un système d'arrêt automatique. Dans ce cas, dès que le système juge que l'intention du conducteur est d'arrêter le véhicule par analyse d'un certain nombre de paramètres comme la vitesse du véhicule, l'enfoncement de la pédale de frein, le débrayage, etc.), le système va automatiquement procéder à l'arrêt du moteur. Puis, dès que les actions du conducteur vont au contraire être analysées comme une demande de redémarrage, le moteur est remis automatiquement en marche. Dans ces conditions, si le conducteur pratique par exemple un stop glissé, la commande de redémarrage peut être effectuée avant même que l'opération de purge induite par la commande d'arrêt moteur n'ait eu le temps de se terminée. L'invention permet de remettre le système de dépollution en mode actif le plus rapidement possible après ce type d'évènement.

Selon une variante, le procédé est caractérisé en que l'état de remplissage de la canalisation d'alimentation est déterminé par le pourcentage ou le volume de réducteur contenu dans la canalisation d'alimentation en réducteur.

Dans une variante, l'état de remplissage de la canalisation est l'état de remplissage enregistré lors de la désactivation de l'opération de purge ayant précédé la demande d'amorçage du dispositif, l'état de remplissage de la canalisation étant calculé tout au long de la purge.

Dans une variante, lors de phase de remplissage de la canalisation, on active l'injecteur en alternant les phases avec la pompe active et les phases avec l'injecteur actif.

Dans une variante, l'activation du système de réduction catalytique sélective est activée en fonction d'au moins l'un des paramètres choisi parmi la température dans la ligne d'échappement du véhicule, le niveau de remplissage d'un réservoir de réducteur ou la pression en amont de l'injecteur.

Dans une variante, la durée d'amorçage et la durée de la mise en pression sont mises à jour en fonction d'une valeur indiquant que la pompe a atteint un point de fonctionnement voulu. Avantageusement cette valeur indiquant si la pompe a atteint un point de fonctionnement voulu est une mesure du courant consommé par la pompe. En fonction du choix des organes du système de réduction sélective, on peut aussi se baser sur des données d'un régulateur mécanique de pression par exemple.

Dans une variante, la méthode selon l'invention comprend en outre la détermination de la cohérence en fonction d'une donnée de pression ligne et d'une valeur indiquant que la pompe a atteint le point de fonctionnement voulu.

Dans une variante, lors de phase de remplissage de la canalisation, on active l'injecteur en alternant les phases avec la pompe active et les phases avec l'injecteur actif. Il est en est éventuellement de même lors de la phase de mise en pression.

L'invention concerne également un système de réduction catalytique sélective pour véhicule, comprenant une pompe de réducteur, au moins une canalisation d'alimentation en réducteur d'une ligne d'échappement du véhicule, et un dispositif d'aspiration de fluide de purge, caractérisé en ce qu'il comprend un contrôleur mettant en oeuvre le procédé selon l'invention.

L'invention concerne également un véhicule comprenant une ligne d'échappement caractérisé en ce qu'il comprend un système de réduction catalytique sélective selon l'invention.

D'autres caractéristiques et avantages de l'invention apparaîtront à la lecture de la description détaillée qui suit des modes de réalisation de l'invention, donnés à titre d'exemple uniquement et en référence aux dessins qui montrent :
- figure 1, un exemple de système SCR ;
- figure 2, un schéma explicatif d'un exemple de procédé selon l'invention.

L'exemple de réalisation proposé ci-après est celui du contrôle de l'amorçage d'un système de réduction catalytique sélective des oxydes d'azote par injection dans la ligne d'échappement d'un moteur thermique d'un réducteur liquide (par exemple une solution aqueuse d'urée) ou gazeux.

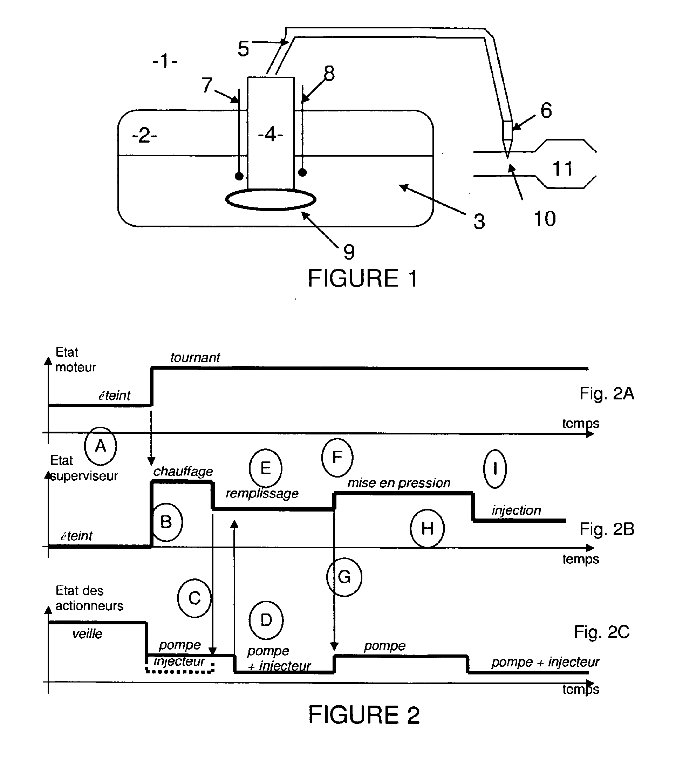

Un exemple de système SCR est présenté en figure 1. Le système SCR 1 est composé d'un ou plusieurs réservoirs 2 pour stocker le réducteur 3, d'une pompe 4, d'une ou plusieurs canalisations 5 et d'un injecteur 6. Cet injecteur peut du type généralement utilisé pour l'injection de carburant dans les moteurs à injection indirecte d'essence. La canalisation 5 peut être chauffante. Les réservoirs 2 comprennent également un capteur de niveau 7, un capteur de température 8 et au moins un élément chauffant 9. La canalisation 5 permet d'amener le réducteur 3 dans la ligne d'échappement 10 du véhicule avant le catalyseur 11 du système SCR 1. A la fin de chaque roulage (fonctionnement du véhicule), les canalisations 5, l'injecteur 6 et/ou la pompe 4 (ou une partie de celle-ci) peuvent être vidés de leur réducteur 3. Ainsi lorsque ces composants sont sensibles au froid, la purge du réducteur 3 permet de ne pas créer de dommages en cas de gel pendant la période d'arrêt du véhicule. Pendant la phase de purge, le réducteur 3 contenu dans ces composants retourne dans le réservoir 2, remplacé par un fluide de purge (air ou gaz d'échappement). Ce procédé de purge peut être réalisé, par exemple, en faisant tourner la pompe 4 en sens inverse et en ouvrant un dispositif d'aspiration. Le dispositif d'aspiration peut être l'injecteur 6 afin de substituer au réducteur 3 les gaz d'échappement.

Dans l'exemple représenté en figure 1, un moteur à combustion 1 est doté d'une ligne d'échappement comportant successivement un catalyseur d'oxydation 2 (ou d'oxydoréduction dans le cas d'un moteur à allumage commandé), un moyen de réduction catalytique sélective des oxydes d'azotes (catalyseur SCR 3), et un filtre à particules 4. La ligne d'échappement est en outre dotée de moyens d'introduction 5 d'un fluide réducteur, à savoir, dans l'exemple ici représenté, un injecteur du type généralement utilisé pour l'injection de carburant dans les moteurs à injection indirecte d'essence, ou du type injecteur pompe.

Dans ce qui suit, le remplissage de la canalisation d'alimentation 5 est le pourcentage ou volume de réducteur 3 contenu à l'intérieur de la canalisation 5. Ceci peut être déterminé en fonction du nombre de rotations de la pompe ou de sa durée de fonctionnement, et de son mode de fonctionnement (mode purge ou mode alimentation). Le dispositif d'aspiration peut être est un injecteur 6 de réducteur 3 dans la ligne d'échappement 10 du véhicule. Le fluide de purge est alors composé des gaz d'échappement du véhicule. Alternativement le dispositif d'aspiration peut-être une valve, par laquelle de l'air est aspiré en tant que fluide de purge. La valve est par exemple portée par l'injecteur 6.

Les étapes du procédé selon l'invention seront mieux comprises en référence à la figure 2. La figure décrit un exemple du procédé selon l'invention mis en oeuvre par un superviseur ou contrôleur du système SCR 1. La figure 2 présente sur trois axes temporels les états respectifs du moteur du véhicule (fig.2A), du superviseur du système SCR 1 (fig. 2B), et des actionneurs mis en oeuvre (fig.2C).

Tant que le moteur du véhicule est à l'arrêt, le dispositif de traitement des NOx n'est bien sûr pas actif.

Dès que le moteur démarre à la commande du conducteur, qui par exemple tourne la clef de contact, ou redémarre automatiquement suite à un arrêt par un système de type stop-and-start, le superviseur SCR est activé.

Ce superviseur vérifie si les conditions d'une injection de réactif sont réunies, et à l'étape A, le superviseur du système de traitement détermine s'il existe un besoin d'amorçage en fonction de l'état du moteur (arrêt ou non) et/ou du régime moteur.

A l'étape B, le superviseur contrôle si cet amorçage dont le besoin est reconnu peut être autorisé, ce qui suppose notamment une information sur l'état du réservoir d'agent réducteur et une information sur l'état de cet agent réducteur. En particulier, si l'agent réducteur est une solution aqueuse d'urée à 32,5% (connue sous la dénomination commerciale « Adblue », marque déposée de VDA, Verband der Automolindustrie), il importe de vérifier par exemple que la température de l'agent réducteur est bien supérieure à son point de gel de -11 °C, ou du moins que l'on dispose bien dès cet instant d'un volume de réducteur non gelé suffisant au niveau du puisage, les moyens de chauffage spécifiques du réservoir d'agent de traitement pouvant être disposés uniquement à proximité du puisage, l'ensemble du volume du réservoir étant chauffé plus ou moins directement par le moteur du véhicule. Dans cet étape B, en fonction de paramètres tels que la température d'urée et le niveau de remplissage du réservoir, le superviseur calcule l'instant d'autorisation de l'amorçage.

Dès que l'amorçage est autorisé, on entre dans l'étape C où le supervise active la phase d'amorçage du système de traitement.

Cette phase d'amorçage est une phase composite, comportant notamment l'amorçage de la pompe elle-même, la vidange du fluide qui occupe la canalisation d'alimentation (de l'air ou des gaz d'échappement par exemple), le remplissage de cette canalisation d'alimentation par le fluide réducteur, et la mise en pression du fluide réducteur dans la canalisation.

Selon l'invention, à l'étape C, le supervise calcule une durée théorique de la phase de remplissage, A l'extrême, le remplissage de la ligne peut être initialement de 100% (le temps écoulé entre la commande d'arrêt moteur et la commande de redémarrage n'a pas permis à la commande de purge d'activer la purge. Dans tous les autres cas, un remplissage plus ou moins complet de la ligne est nécessaire.

La durée théorique de la phase de remplissage est considérée au premier degré comme dépendant de l'état de remplissage de la ligne. Elle dépend aussi de la capacité de la pompe, c'est-à-dire du débit qui est développé lors de la phase d'amorçage. Cette capacité peut être considérée comme un paramètre invariable, qui sera mis jour une fois pour toute lors du chargement des données de contrôle moteur avant la livraison du véhicule, au même titre que le volume de remplissage.

A l'étape D, une fois cette durée théorique calculée, la pompe 4 et l'injecteur 6 sont activés de manière séquentielle. L'ordre d'activation peut être prédéterminé, ou choisi lors de la mise en oeuvre du procédé. l'activation de l'injecteur étant nécessaire pour évacuer le fluide présent dans la canalisation (comme par exemple des gaz d'échappement). L'ordre d'activation est choisi par le superviseur par exemple à partir d'une calibration en fonction de l'organique choisi. Cet ordre peut être également choisi en direct en fonction de la contre-pression à l'échappement (soit elle est forte et on choisit d'activer la pompe d'abord pour compenser cette contrepression, soit elle est faible et les activations pompe et injecteur sont quasi simultanées).

A l'étape E, la pompe 4 et l'injecteur 6 ont été activés, le décompte de la durée d'amorçage commence. La durée du remplissage (ou temporisation) est déterminée en fonction de paramètres du système SCR 1, et/ou du véhicule acquis avant l'activation du remplissage. Cette durée peut être déterminée en fonction de la longueur de la canalisation d'alimentation 5. En particulier la durée de remplissage peut être déterminée en fonction de l'état de remplissage de la canalisation d'alimentation 5 avant l'activation de l'amorçage. Cette durée peut également être fonction de la pression au niveau de l'injecteur, autrement dit dans la ligne d'échappement 10 au niveau de cet injecteur 6.

Cette pression peut être déterminée à partir d'un capteur au voisinage de l'injecteur 6, d'un modèle associé à des capteurs positionnés dans la ligne d'échappement 10 à distance de l'injecteur 10, ou à partir d'un modèle du moteur du véhicule. A noter que cette pression est d'autant plus importante à prendre en compte que si le dispositif SCR est placé en amont d'un filtre à particules, qui en fonction de son état de charge, va créer une dépression dans la ligne plus ou moins importante.

La durée d'amorçage peut également être fonction de la capacité de la pompe 4.

A l'étape E, pendant cette phase d'activation en alternance de la pompe et de l'injecteur, le superviseur décompte la durée d'amorçage déjà écoulée, jusqu'à ce que la temporisation théorique calculée précédemment soit atteinte. A noter que si l'on dispose d'un moyen de mesure de la quantité de gaz injectée dans la ligne d'échappement, la durée restante peut être pondérée en direct par ce facteur.

A noter que le mélange entre le fluide réducteur et le fluide contenu dans la canalisation suite à la purge ne se produit pratiquement pas si le diamètre de la canalisation est petit. En revanche, à partir d'un certain diamètre, les deux fluides se mélangent jusqu'à créer de fines toiles, et il est alors avantageux d'ouvrir périodiquement l'injecteur pendant la mise en pression car cet air se présente alors sous formes de bulles.

A l'étape F, la phase de temporisation achevée, l'injecteur est piloté de façon à effectuer la mise en pression. Deux techniques peuvent être utilisées pour ce faire : soit on laisse l'injecteur en position fermé, ce qui a pour avantage d'éviter l'injection intempestive d'ammoniac dans la ligne d'échappement, mais alors on a tendance à surestimer la durée d'amorçage car s'il reste un peu de gaz issu de la première phase et la compression de ce gaz va entraîner un ralentissement de la mise en pression non maîtrisée d'un point de vue temporel ; de ce fait, il faut prendre une marge sur la durée supposée de la mise en pression, d'où une durée surestimée. L'autre possibilité est de continuer à ouvrir l'injecteur régulièrement comme dans la phase précédente pour finir d'évacuer l'air ou les gaz d'échappement, ce qui permet de procéder à un amorçage plus rapidement, mais avec le risque d'injection d'ammoniac dans la ligne d'échappement alors que le catalyseur SCR est encore en phase de préchauffe donc inactif.

Comme désigné en G, le superviseur calcule l'état de remplissage de la ligne, information mise à jour tout au long de la mise en pression : cette information sera utile pour optimiser la stratégie de purge.

A l'étape H, le superviseur lance deuxième décompte correspondant au temps de mise en pression théorique (ce temps est encore une fois lié au débit pompe ...).

A l'étape I, le superviseur met à jour la durée de ce décompte en fonction d'une donnée de pression ligne s'il en dispose (capteur de pression ou capteur qui permet une estimation de cette pression) ou d'une donnée de courant (ou régime pompe, ou toute valeur indiquant que la pompe a atteint le point de fonctionnement voulu) si le choix organique la rend pertinente (régulateur mécanique de pression par exemple).

Dans un mode de réalisation, cette étape I effectuant la synthèse pour autoriser ou non l'injection peut aussi comprendre un diagnostic basé sur la cohérence d'au moins deux de ces trois informations (si on dispose des trois).le procédé comprend en outre la détermination de la cohérence en fonction d'une donnée de pression ligne s'il en dispose (capteur de pression ou capteur qui permet une estimation de cette pression) ou d'une donnée de courant (ou régime pompe, ou toute valeur indiquant que la pompe a atteint le point de fonctionnement voulu) si le choix organique la rend pertinente (régulateur mécanique de pression par exemple).

Dans le cas d'une désactivation brutale de l'amorçage créé par un besoin de purge, le contrôle saute automatiquement de l'étape en cours à une phase de purge des canalisations. Une telle désactivation peut se produire à la suite du retrait de la clé de contact par un utilisateur du véhicule, d'un arrêt du moteur du véhicule, ou encore à cause d'un dysfonctionnement d'un des actionneurs réalisant l'amorçage.

L'invention concerne également un système de réduction catalytique sélective 1 pour véhicule, comprenant un contrôleur mettant en oeuvre le procédé selon l'invention. Le système SCR selon l'invention présente les caractéristiques décrites précédemment.

L'invention concerne également un véhicule comprenant un système de réduction catalytique selon l'invention.

L'invention permet un contrôle générique de la mise en pression des lignes, tout en raccourcissant cette phase afin de dépolluer au plus vite.

## Revendications

1. Méthode de contrôle de l'activation d'un système de traitement des gaz d'échappement d'un moteur à combustion interne (1) par injection d'un agent de traitement dans la ligne d'échappement du moteur, le système comprenant une canalisation d'alimentation (5) de l'agent de traitement et une pompe (4) susceptible à la fois d'alimenter un injecteur (6) et de purger au moins pour partie la canalisation d'alimentation (5) suite à une demande d'arrêt du moteur, l'activation du système comportant une phase de remplissage de la canalisation (5) et une phase de mise en pression de la canalisation, **caractérisée par** une étape de détermination d'une durée d'amorçage en fonction d'un état de remplissage de la canalisation d'alimentation avant l'activation de la pompe et par un décompte de cette durée d'amorçage avant d'initier la phase de mise en pression.

2. Méthode de contrôle selon la revendication 1, **caractérisée en ce que** l'état de remplissage de la canalisation d'alimentation est déterminé par le pourcentage ou le volume de réducteur contenu dans la canalisation d'alimentation.

3. Méthode selon la revendication 1 ou la revendication 2, **caractérisée en ce que** l'état de remplissage de la canalisation est l'état de remplissage enregistré lors de la désactivation de l'opération de purge ayant précédé la demande d'amorçage du dispositif, l'état de remplissage de la canalisation étant calculé tout au long de la purge.

4. Méthode selon la revendication 3, **caractérisée par** une mise à jour de la durée de remplissage en fonction de la pression au niveau de l'injecteur.

5. Méthode selon la revendication 3 ou la revendication 4, **caractérisée par** une mise à jour de la durée de remplissage en fonction d'une quantité mesurée de gaz injectée dans la ligne pendant la phase de remplissage.

6. Méthode selon l'une quelconque des revendications précédentes, **caractérisée par** une mise à jour de la durée de mise en pression en fonction d'une valeur indiquant que la pompe a atteint un point de fonctionnement voulu.

7. Méthode selon la revendication 6, **caractérisée en ce que** la valeur indiquant si la pompe a atteint un point de fonctionnement voulu est une mesure du courant consommé par la pompe.

8. Méthode selon la revendication 6, **caractérisée en ce qu'**elle comprend en outre la détermination de la cohérence en fonction d'une donnée de pression ligne et d'une valeur indiquant que la pompe a atteint le point de fonctionnement voulu.

9. Méthode selon l'une des revendications précédentes, **caractérisée en ce que** lors de phase de remplissage de la canalisation, on active l'injecteur en alternant les phases avec la pompe active et les phases avec l'injecteur actif.

10. Méthode selon l'une des revendications précédentes **caractérisé en ce que** l'activation du système de réduction catalytique sélective (1) est activée en fonction d'au moins l'un des paramètres choisi parmi la température dans la ligne d'échappement (10) du véhicule, le niveau de remplissage d'un réservoir (2) de réducteur (3) ou la pression en amont de l'injecteur (6).

11. Système de réduction catalytique sélective (1) pour véhicule, comprenant une pompe (4) de réducteur (3), au moins une canalisation d'alimentation (5) en réducteur (3) d'une ligne d'échappement (10) du véhicule, et un dispositif d'aspiration de fluide de purge, **caractérisé en ce qu'**il comprend un contrôleur mettant en oeuvre la méthode de contrôle de l'activation d'un système de traitement des gaz d'échappement selon l'une quelconque des revendications 1 à 10.

12. Véhicule comprenant une ligne d'échappement (10) **caractérisé en ce qu'**il comprend un système de réduction catalytique sélective (1) selon la revendication 11.

## Patentansprüche

1. Kontrollmethode zum Aktivieren eines Behandlungssystem der Auspuffgase eines Verbrennungsmotors (1) durch Injektion eines Behandlungsmittels in die Auspufflinie des Motors, wobei das System eine Zuführkanalisation (5) des Behandlungsmittels und eine Pumpe (4), die sowohl einen Injektor (6) versorgen als auch mindestens zum Teil die Zuführkanalisation (5) nach einer Stoppanfrage des Motors entleeren kann, aufweist, wobei das Aktivieren des Systems eine Phase des Füllens der Kanalisation (5) und eine Druckbeaufschlagungsphase der Kanalisation aufweist, **gekennzeichnet durch** einen Schritt des Bestimmens einer Ansaugdauer in Abhängigkeit von einem Füllzustand der Zuführkanalisation vor dem Aktivieren der Pumpe und **durch** Abwärtszählung dieser Ansaugdauer, bevor die Druckbeaufschlagungsphase eingeleitet wird.

2. Kontrollmethode nach Anspruch 1, **dadurch gekennzeichnet, dass** der Füllzustand der Zuführkanalisation durch den Prozentsatz oder das Volumen an Reduktionsmittel, das in der Zuführkanalisation enthalten ist, bestimmt wird.

3. Kontrollmethode nach Anspruch 1 oder Anspruch 2, **dadurch gekennzeichnet, dass** der Füllzustand der Kanalisation der Füllzustand ist, der bei dem Deaktivieren des Entleerungsvorgangs, der der Ansauganfrage der Vorrichtung vorausgegangen ist, registriert wird, wobei der Füllzustand der Kanalisation während des gesamten Entleerens berechnet wird.

4. Methode nach Anspruch 3, **gekennzeichnet durch** eine Aktualisierung der Fülldauer in Abhängigkeit von dem Druck auf dem Niveau des Injektors.

5. Methode nach Anspruch 3 oder Anspruch 4, **gekennzeichnet durch** eine Aktualisierung der Fülldauer in Abhängigkeit von einer gemessenen Menge Gas, die während der Füllphase in die Linie eingespritzt wird.

6. Methode nach einem der vorhergehenden Ansprüche, **gekennzeichnet durch** eine Aktualisierung der Druckbeaufschlagungsdauer in Abhängigkeit von einem Wert, der anzeigt, dass die Pumpe einen gewünschten Betriebspunkt erreicht hat.

7. Methode nach Anspruch 6, **dadurch gekennzeichnet, dass** der Wert, der anzeigt, ob die Pumpe einen gewünschten Betriebspunkt erreicht hat, eine Messung des von der Pumpe verbrauchten Stroms ist.

8. Methode nach Anspruch 6, **dadurch gekennzeichnet, dass** sie ferner das Bestimmen der Kohärenz in Abhängigkeit von einer Liniendruckinformation und einem Wert, der anzeigt, dass die Pumpe den gewünschten Betriebspunkt erreicht hat, aufweist.

9. Methode nach einem der vorhergehenden Ansprüche, **dadurch gekennzeichnet, dass** man bei der Füllphase der Kanalisation den Injektor aktiviert, indem man die Phasen mit der aktiven Pumpe und die Phasen mit dem aktiven Injektor abwechselt.

10. Methode nach einem der vorhergehenden Ansprüche, **dadurch gekennzeichnet, dass** die Aktivierung des selektiven katalytischen Reduktionssystems (1) in Abhängigkeit von wenigstens einem der Parameter aktiviert wird, der ausgewählt wird aus der Temperatur in der Auspufflinie (10) des Fahrzeugs, dem Füllstand eines Behälters (2) des Reduktionsmittels (3) oder dem Druck stromaufwärts des Injektors (6).

11. System zur selektiven katalytischen Reduktion (1) für Fahrzeug, das eine Pumpe (4) für Reduktionsmittel (3), mindestens eine Zuführkanalisation (5) von Reduktionsmittel (3) einer Auspufflinie (10) des Fahrzeugs sowie eine Ansaugvorrichtung von Entleerungsfluid aufweist, **dadurch gekennzeichnet, dass** es einen Controller aufweist, der die Kontrollmethode der Aktivierung eines Behandlungssystems der Auspuffgase nach einem der Ansprüche 1 bis 10 umsetzt.

12. Fahrzeug, das eine Auspufflinie (10) aufweist, **dadurch gekennzeichnet, dass** es ein System zur selektiven katalytischen Reduktion (1) nach Anspruch 11 aufweist.

## Claims

1. A method for checking the activation of a processing system of the exhaust gases of an internal combustion engine (1) by injection of a processing agent in the exhaust line of the engine, the system including a supply duct (5) of the processing agent and a pump (4) able to both supply an injector (6) and to purge at least partially the supply duct (5) following a stop request of the engine, the activation of the system comprising a filling phase of the duct (5) and a pressurization phase of the duct, **characterized by** a step of determining an ignition duration as a function of a state of filling of the supply duct before the activation of the pump and by a counting of this ignition duration before initiating the pressurization phase.

2. The checking method according to Claim 1, **characterized in that** the filling state of the supply duct is determined by the percentage or the volume of reducer contained in the supply duct.

3. The method according to Claim 1 or Claim 2, **characterized in that** the filling state of the duct is the filling state recorded on deactivation of the purging operation, having preceded the ignition request of the device, the filling state of the duct being calculated throughout the purge.

4. The method according to Claim 3, **characterized by** an updating of the filling duration as a function of the pressure at the level of the injector.

5. The method according to Claim 3 or Claim 4, **characterized by** an updating of the filling duration as a function of a measured quantity of injected gas in the line during the filling phase.

6. The method according to any one of the preceding claims, **characterized by** an updating of the duration of pressurization as a function of a value indicating that the pump has reached a desired functioning point.

7. The method according to Claim 6, **characterized in that** the value indicating if the pump has reached a desired functioning point is a measurement of the current consumed by the pump.

8. The method according to Claim 6, **characterized in that** it includes, furthermore, the determining of the coherence as a function of a line pressure datum and of a value indicating that the pump has reached the desired functioning point.

9. The method according to one of the preceding claims, **characterized in that** during the filling phase of the duct, the injector is activated by alternating the phases with the active pump the phases with the active injector.

10. The method according to one of the preceding claims, **characterized in that** the activation of the selective catalytic reduction system (1) is activated as a function of at least one of the parameters selected from the temperature in the exhaust line (10) of the vehicle, the filling level of a reservoir (2) of reducer (3) or the pressure upstream of the injector (6).

11. A selective catalytic reduction system (1) for a vehicle, including a pump (4) of reducer (3), at least one supply duct (5) of reducer (3) of an exhaust line (10) of the vehicle, and a device for aspiration of purge fluid, **characterized in that** it includes a controller implementing the method for checking the activation of a processing system of the exhaust gases according to any one of Claims 1 to 10.

12. A vehicle including an exhaust line (10), **characterized in that** it includes a selective catalytic reduction system (1) according to Claim 11.
